# EUROPÄISCHE PATENTANMELDUNG

(11) **EP 4 512 583 A1**
(43) Veröffentlichungstag der Anmeldung: **26.02.2025**
(21) Anmeldenummer: 24187195.3
(22) Anmeldetag: 08.07.2024
(51) Int. Cl.: B26B 3/03, A47J 17/02

(54) **MESSER ZUM SCHNEIDEN UND SCHÄLEN**

(30) Priorität: 10.08.2023 CH 8592023
(71) Anmelder: Rasa, Iwan, 8505 Pfyn (CH)
(72) Erfinder: Rasa, Iwan, 8505 Pfyn (CH); Rasa, Nousha, 8505 Pfyn (CH); Rasa, Shajan, 8505 Pfyn (CH); Rasa, Sheyda, 8505 Pfyn (CH)
(74) Vertreter: Gachnang AG Patentanwälte

(57) **Zusammenfassung**

Ein erfindungsgemässes Messer (1) umfasst einen Griff (2) und eine Klinge (3). Die Klinge (3) erstreckt sich in einer zentralen Messerebene von einer Schneidkante (4) zu einer stumpfen Rückkante (5). Das Messer (1) umfasst ein Führungselement (6), welches um eine orthogonal zur zentralen Messerebene ausgerichtete Schwenkachse (7) zwischen einer ersten Position und einer zweiten Position über die stumpfe Rückkante (5) bewegbar ist. Das Führungselement (6) liegt in der ersten Position beim Griff (2). In der zweiten Position ist das Führungselement (6) so der Schneidkante (4) zugeordnet, dass zwischen der Schneidkante (4) und einer Auflagelinie des Führungselements (6) ein Schneidspalt ausgebildet ist. Das Messer ist sowohl als normales Messer als auch mit dem Führungselement (6) in der zweiten Position als Sparschäler optimal einsetzbar.

## Beschreibung

Die Erfindung betrifft Messer nach dem Oberbegriff von Anspruch 1.

Messer umfassen einen Griff und mindestens eine Klinge mit einer Schneidkante. Die Klinge erstreckt sich bei einer zentralen Ebene von der Schneidkante zu einer stumpfen Rückkante. Messer werden für die Bearbeitung von Esswaren eingesetzt. Die Messer sind dabei auf die jeweilige Art der Bearbeitung und den Ort ihrer Benützung ausgelegt. Zu den gängigen Bearbeitungsarten gehören Schneiden, Stechen, Hacken und Schälen. Zum Schälen von Obst, Kartoffeln oder Gemüse werden Messer mit kurzen Klingen oder Sparschäler eingesetzt. Sparschäler umfassen eine Schneidkante und ein mit der Klinge fest verbundenes Führungselement mit einer Auflagelinie, wobei zwischen der Schneidkante und der Auflagelinie ein Schneidspalt ausgebildet ist, so dass beim Schälen lediglich Schalenstücke abgetrennt werden, deren Mächtigkeit vom Schneidspalt vorgegeben wird.

Esswaren werden meist in Küchen aber auch im Freien bearbeitet. Die vielfältigen Ausgestaltungen des Griffs und der Klinge sollen die jeweilige Art der Bearbeitung erleichtern. Bei den Messern zum Schneiden erstreckt sich der Griff in einer Grifflängsachse und die Klinge erstreckt sich in Richtung der Grifflängsachse vom Griff weg.

Bei Messern, die im Freien verwendet werden und von denen beim Transport keine Gefahr ausgehen darf, ist die Klinge bewegbar am Griff befestigt. In einer geschlossenen Position ist die Schneidkante der Klinge so beim Griff angeordnet, dass die Schneidkante nicht zugänglich ist. Die Klinge und ihre Schneidkante gelangen in eine Arbeitsposition bzw. in eine offene Position, in welcher sich die Klinge in Richtung der Grifflängsachse vom Griff weg erstreckt, entweder durch das Ausschwenken der Klinge um eine Klingenlagerung bei einem Endbereich des Griffs oder durch eine Schiebebewegung aus dem Griff.

Bei Sparschälern gibt es zwei charakteristisch verschieden Ausrichtungen der Schneidkante relativ zur Grifflängsachse. Wenn die Schneidkante eines Sparschälers orthogonal zur Grifflängsachse ausgerichtet ist, wird beim Schälen häufig der ganze Arm bewegt. Wenn sich die Schneidkante eines Sparschälers in Richtung der Grifflängsachse vom Griff weg erstreckt, kann bereits eine Bewegung des Handgelenks zum Schälen genügen.

CH 292339 beschreibt ein Messer, das zum freien Schneiden eingesetzt werden kann. Zusammen mit einem starren Draht mit einem geraden Teil und zwei Enden, kann das Messer zum Abtrennen von Teilen von Kartoffeln, Karotten, Birnen, Äpfeln und anderen Früchten eingesetzt werden. Die beiden Enden des Drahtes sind je gegensinnig schraubenförmig um parallele Windungsachsen gewunden. In den beiden Bereichen, die beidseits an den geraden Teil anschliessen, verlaufen Segmente der Enden bezogen auf die parallelen Windungsachsen direkt übereinander und bilden je einen Aufnahmebereich für eine Klinge eines Messers.

Um den Draht an der Klinge eines Messers zu befestigen, werden der Draht und das Messer so ausgerichtet, dass sich die zentrale Ebene der Klinge orthogonal zu den parallelen Windungsachsen erstreckt. In dieser gegenseitigen Ausrichtung wird die Schneidkante der Klinge zwischen die je übereinander verlaufenden Segmente beider Enden in diese Aufnahmebereiche eingeführt.

Die beiden Übergänge des starren Drahtes vom geraden Teil zu den beiden gewundenen Enden verlaufen quer zur zentralen Ebene der Klinge, bzw. in einer Richtung mit einer Komponente entlang der Windungsachsen, und bilden je einen Anschlag für die Schneidkante der Klinge. Wenn der starre Draht bis zu den beiden Anschlägen auf die Klinge aufgesteckt ist, bildet ein der Schneidkante zugewandter Bereich des geraden Teils eine Auflagelinie, die in einem Abstand zur zentralen Ebene der Klinge verläuft. Dieser Abstand definiert die Mächtigkeit von abgetrennten Teilen, wie beispielsweise Schalen, welche mit der Klinge beim Anliegen der Auflagelinie an Obst, Kartoffeln oder Gemüse von diesen abgetrennt werden.

Das Aufstecken des Drahtes auf die Schneidkante einer Klinge ist gefährlich, weil die von einer Person dazu verwendeten Finger mit Kräften gegen die Schneidkante drücken und dabei ungewollt auf die Schneidkante geraten können, was bei scharfen Messern mit einer hohen Schnittgefahr verbunden ist. Zudem werden die beiden Übergänge des starren Drahtes vom geraden Teil zu den beiden gewundenen Enden beim Aufstecken gegen die Schneidkante gedrückt. An den Kontaktstellen wird die Schneidkante vom harten Draht unerwünscht verformt. Zumindest häufiges Aufstecken und Abnehmen des Drahtes mit der Auflagelinie reduziert die Schneidfähigkeit der Schneidkante. Wenn die Klinge vor dem vollständigen Abtrennen eines Teils des behandelten Produkts entgegen der Schneidrichtung zurückgezogen wird, so kann der Draht von der Klinge abgelöst werden und muss zwischen den abgetrennten Schalen gesucht und wieder aufgesteckt werden.

Die erfindungsgemässe Aufgabe besteht nun darin eine ungefährliche Lösung zu finden, mit der ein Messer sowohl zum freien Schneiden als auch zum Abtrennen von Teilen bestimmter Mächtigkeit, insbesondere zum Schälen, eingesetzt werden kann.

Diese Aufgabe wird durch ein Messer mit den Merkmalen des Anspruchs 1 gelöst. Die abhängigen Ansprüche beschreiben alternative bzw. vorteilhafte Ausführungsvarianten, welche weitere Aufgaben lösen.

Im Rahmen eines ersten erfinderischen Schrittes wurde erkannt, dass bei einem Messer mit einer Klinge, die eine Schneidkante und davon abgewandt eine stumpfe Rückkante aufweist, Benützende gefahrlos gegen die stumpfe Rückkante drücken können.

Im Rahmen eines zweiten erfinderischen Schrittes wurde erkannt, dass ein Führungselement über die stumpfe Rückkante bis zur Schneidkante bewegt werden kann, so dass zwischen der Schneidkante und einer Auflagelinie des Führungselements ein Schneidspalt ausgebildet ist. Im Bereich des Schneidspaltes können Schalen oder Scheiben von Gemüse, Früchten oder Kartoffeln abgetrennt werden, deren Mächtigkeit durch die Distanz der Auflagelinie von der zentralen Ebene der Klinge vorgegeben ist.

Das erfindungsgemässe Messer kann zum Schneiden und zum Schälen eingesetzt werden. Es umfasst einen Griff und mindestens eine am Griff befestigte Klinge, wobei sich die Klinge in einer zentralen Messerebene von einer Schneidkante zu einer von der Schneidkante abgewandten stumpfen Rückkante erstreckt. Der Griff erstreckt sich in einer Grifflängsachse. Beim Schneiden oder Schälen erstreckt sich die Klinge des Messers in Richtung der Grifflängsachse vom Griff weg. Das Messer umfasst ein Führungselement, welches um eine quer, vorzugsweise orthogonal, zur zentralen Messerebene ausgerichtete Schwenkachse zwischen einer ersten und einer zweiten Position über die stumpfe Rücckante der sich in Richtung der Grifflängsachse vom Griff weg erstreckenden Klinge bewegbar ist. Das Führungselement liegt in der ersten Position beim Griff. In der zweiten Position ist das Führungselement so der Schneidkante zugeordnet, dass zwischen der Schneidkante und einer Auflagelinie des Führungselements ein Schneidspalt ausgebildet ist.

Beim erfindungsgemässen Messer besteht beim Wechsel vom Zustand, bei dem lediglich die Klinge vom Griff vorsteht, zum Zustand, bei dem zum Schälen das Führungselement der Klinge zugeführt ist, keine Gefahr, dass ein Finger der benützenden Person von der Schneidkante der Klinge verletzt wird. Zudem umfasst das Messer keine Elemente, welche mit der Schneidkante in Kontakt treten und somit wird auch die Schneidkante nicht unerwünscht verformt. Die Schneidfähigkeit der Schneidkante wird durch das Führungselement nicht beeinträchtigt. Das erfindungsgemässe Messer ist sowohl als normales Messer mit Griff und Klinge als auch mit dem der Klinge zugeordneten Führungselement als Sparschäler optimal einsetzbar. Wenn abwechselnd Schneid- und Schälbearbeitungen nötig sind, können diese mit einem einzigen Messer durchgeführt werden. Zwischen den verschiedenen Bearbeitungen muss lediglich das Führungselement von der ersten zur zweiten oder von der zweiten zur ersten Position verstellt werden.

Bei einer vorteilhaften Ausführungsform weist das Führungselement in einem Bereich beim von der Schwenkachse abgewandten freien Ende ein Eingriffselement auf. Die Klinge umfasst eine durch die Klinge führende Positionieröffnung, welche so angeordnet ist, dass das Eingriffselement in der zweiten Position auf die Positionieröffnung trifft und in diese eingreifen kann. Dabei ist das Führungselement vorzugsweise so ausgebildet oder vorgespannt, dass das Eingriffselement in die Positionieröffnung eingreift. Das Eingreifen ist insbesondere so ausgebildet, dass ein Schneidspalt gebildet wird, welcher beim Schälen oder Scheibenschneiden Schalen bzw. Scheiben abtrennt, die entlang des Schneidspaltes eine im Wesentlichen konstante Mächtigkeit aufweisen. Ein mit einem Finger ergreifbares Entnahmeelement des Führungselementes ermöglicht das Entnehmen des Eingriffselementes aus der Positionieröffnung und die Bewegung des Führungselementes gegen die erste Position.

Damit das Führungselement nicht über die zweite Position bzw. nicht über die Schneidkante hinaus bewegt werden kann, ist bei einer vorteilhaften Ausführungsform zwischen dem Führungselement und der Klinge oder dem Griff ein Anschlag ausgebildet.

Vorzugsweise steht die Klinge in der Richtung vom Griff weg mit einem spitzen Bereich über die Positionieröffnung oder über den Bereich mit dem Führungselement in der zweiten Position vor. Dieser spitze Bereich ist als Ausstechbereich einsetzbar. Wenn beim Schälen lokale Stellen zurückbleiben, die entfernt werden müssen, so können diese mit dem gleichen Messer, nämlich mit dem vorstehenden spitzen Bereich, entfernt werden.

Damit das Halten des Griffs sowohl beim Schneiden als auch beim Schälen angenehm ist, weist der Griff bei einer vorteilhaften Ausführungsform einen Aufnahmebereich für das Führungselement auf. In der ersten Position ist das Führungselement zumindest teilweise im Aufnahmebereich aufgenommen und steht somit nicht unangenehm vom Griff vor.

Wenn die Klinge über eine unverstellbare Verbindung am Griff befestigt ist und somit immer in der Grifflängsachse vom Griff vorsteht, ist es zweckmässig, wenn die Schwenkachse im Bereich der Klinge angeordnet ist, welcher dem Griff zugewandt ist. Bei der Schwenkachse ist dann vorzugsweise ein mit dem Führungselement verbundener Bolzen oder eine Niete durch eine Bohrung der Klinge geführt.

Gemäss einer weiteren Ausführungsform ist die Schwenkachse im Endbereich des Griffs angeordnet. Bei der Schwenkachse ist dann vorzugsweise eine Positioniervorrichtung ausgebildet, welche das Führungselement in der zweiten Position so fixiert, dass es nur bei der Anwendung einer über einer vorgegebenen Rückstellkraft liegenden Kraft oder dem Lösen einer Verriegelung gegen die erste Position bewegbar ist.

Bei einer Ausführungsform, die im Freien verwendet wird und von der beim Transport keine Gefahr ausgeht, ist die Klinge bewegbar am Griff befestigt. In einer geschlossenen Position ist die Schneidkante der Klinge so beim Griff angeordnet, dass die Schneidkante nicht zugänglich ist. Die Klinge und ihre Schneidkante können in eine Arbeitsposition bzw. in eine offene Position gebracht werden, in welcher sich die Klinge in Richtung der Grifflängsachse vom Griff weg erstreckt. Der Wechsel zwischen der geschlossenen und der offenen Position kann entweder durch das Ausschwenken der Klinge um eine Klingenlagerung beim Endbereich des Griffs oder durch eine Schiebebewegung aus dem und in den Griff erzielt werden.

Messer mit relativ zum Griff verstellbaren Klingen sind als Taschenmesser, bzw. Klappmesser oder Schliessmesser besonders verbreitet. Taschenmesser umfassen zwei einen Griff bildende Aussenflächen und zwischen den beiden Aussenflächen eine erste und eine zweite Aufnahmeseite, die voneinander abgewandt sind und das Aufnehmen von Arbeitselementen ermöglichen. Die Arbeitselemente werden nach Bedarf durch Bewegungen um Bewegungsachsen aus dem Griff und in den Griff des Taschenmessers bewegt.

Eine vorteilhafte Ausführung des erfindungsgemässen Messers geht von einem Taschenmesser aus. Das Taschenmesser umfasst nebst der mindestens einen an einem ersten Endbereich des Griffs um eine Bewegungsachse bewegbaren Klinge auch ein Führungselement, das um eine Schwenkachse beim ersten Endbereich des Griffs schwenkbar ist.

Die Bewegung der Klinge zwischen der geschlossenen und der offenen Position ist durch eine Schwenkbewegung um eine Bewegungsachse erzielbar. Dabei ist die Bewegungsachse orthogonal zur zentralen Messerebene ausgerichtet und im Bereich des Griffs angeordnet, welcher der vom Griff wegführenden Klinge zugewandt ist. Bei der Bewegungsachse ist vorzugsweise eine Positioniervorrichtung ausgebildet, welche die Klinge in der offenen und in der geschlossenen Position so fixiert, dass sie nur bei der Anwendung einer über einer vorgegebenen Bewegungskraft liegenden Kraft gegen die jeweils andere Position bewegbar ist.

Zum Bereitstellen eines Schälmessers ist die Klinge von der ersten Aufnahmeseite des Taschenmessers in einer ersten Drehrichtung in die offene Position bewegbar. Das Führungselement ist von der zweiten Aufnahmeseite des Taschenmessers in einer der ersten Drehrichtung entgegengesetzten Schwenkrichtung von der ersten Position über die stumpfe Rückkante der sich in Richtung der Grifflängsachse vom Griff weg erstreckenden Klinge in die zweite Position bewegbar. Die Schwenkachse des Führungselementes ist im Endbereich des Griffs mit der Bewegungsachse angeordnet.

Das Führungselement wird wie andere Arbeitselemente eines Taschenmessers in der ersten und zweiten Position jeweils festgehalten, bis eine zum Schwenken nötige Kraft auf das Führungselement aufgebracht wird. Dazu ist bei der Schwenkachse vorzugsweise eine Positioniervorrichtung ausgebildet, welche das Führungselement in der ersten und zweiten Position so fixiert, dass es nur bei der Anwendung einer über einer je vorgegebenen Verstellkraft liegenden Kraft gegen die zweite bzw. erste Position bewegbar ist.

Die verschiedenen vorteilhaften Ausführungsformen in der Form eines Taschenmessers weisen jeweils mindestens ein Element auf, das zum Messer mit einer in Richtung der Grifflängsachse fest vom Griff vorstehenden Klinge beschrieben wurde.

Bei einer vorteilhaften Ausführungsform ist das Führungselement so ausgebildet, dass es bei der Auflagelinie eine Schneidkante aufweist, welche in der zweiten Position des Führungselementes so der Schneidkante der Klinge zugewandt ist, dass abhängig von der Schälrichtung jeweils eine der beiden Schneidkanten das Schälen erzielbar macht und die andere als Auflagelinie den Schneidspalt festlegt. Das Führungselement erstreckt sich ausgehend von seiner Schneidkante entlang einer Schneidebene. Die zentrale Messerebene und die Schneidebene treffen im Bereich zwischen den beiden Schneidkanten bei einer Schnittlinie unter einem Winkel aufeinander, welcher Winkel kleiner als 180° und grösser als 90°ist.

Damit alternativ ein jeweils gleichartiges Schälen mit der Schneidkante der Klinge oder mit der Schneidkante des Führungselementes ermöglicht wird, ist der Abstand der Schneidkante des Führungselementes von der zentralen Messerebene im Wesentlichen gleich gross wie der Abstand der Schneidkante der Klinge von der Schneidebene. Beim Schälen mit der Schneidkante der Klinge bildet die Schneidkante des Führungselementes eine Auflagelinie. Beim Schälen mit der Schneidkante des Führungselementes bildet die Schneidkante der Klinge eine Auflagelinie. Zwischen jeder der beiden einander zugewandten Schneidkanten und der von der jeweils anderen Schneidkante gebildeten Auflagelinie ist ein Schneidspalt ausgebildet, welcher beim Schälen die Mächtigkeit von abgetrennten Schalen oder Scheiben festlegt.

Die beiden einander zugewandten Schneidkanten ermöglichen der jeweiligen benützenden Person ein Schälen in der von ihr bevorzugten Schälrichtung und mit der jeweils bevorzugten rechten oder linken Hand.

Bei einer weiteren vorteilhaften Ausführungsform weist das erfindungsgemässe Messer zwei Führungselemente auf. Die beiden Führungselemente sind bezüglich der zentralen Messerebene spiegelsymmetrisch angeordnet und je einzeln gleichartig zwischen der jeweiligen ersten und zweiten Position bewegbar. Zum Schälen sind jeweils das für die gewünschte Schälrichtung passende Führungselement in der zweiten Position und das andere Führungselement in der ersten Position positionierbar. Die Wahl zwischen zwei verschiedenen Führungselementen ermöglicht es der jeweiligen benützenden Person abhängig von ihrer bevorzugten Schälrichtung oder abhängig davon, ob sie die Schälbewegung mit der rechten oder linken Hand ausführt, immer des passende Führungselement verwenden zu können.

Anhand einiger Figuren wird die Erfindung im Folgenden näher beschrieben. Dabei zeigen
Figur 1 eine Seitenansicht eines Messers mit dem Führungselement in der ersten Position beim Griff,
Figur 2 eine Seitenansicht des Messers mit dem Führungselement bei der Bewegung zwischen der ersten und zweiten Position,
Figur 3 eine Seitenansicht des Messers mit dem Führungselement in der zweiten Position bei der Klinge,
Figur 4 eine Sicht auf die vom Führungselement abgewandte Seite des Messers mit dem Führungselement in der zweiten Position,
Figur 5 eine Sicht auf die Schneidkante des Messers mit dem Führungselement in der zweiten Position,
Figur 6 eine Sicht auf die Seite des Messers mit dem Führungselement, welches in der zweiten Position ist,
Figur 7 eine Sicht auf die stumpfe Rückkante des Messers mit dem Führungselement in der zweiten Position,
Figur 8 eine Seitenansicht eines Taschenmessers mit der Klinge in der geschlossenen Position und dem Führungselement in der ersten Position,
Figur 9 eine Seitenansicht des Taschenmessers mit der Klinge zwischen der geschlossenen und der offenen Position und dem Führungselement zwischen der ersten und zweiten Position,
Figur 10 eine Seitenansicht des Taschenmessers mit der Klinge in der offenen Position und dem Führungselement zwischen der ersten und zweiten Position und
Figur 11 eine Seitenansicht des Taschenmessers mit der Klinge in der offenen Position und dem Führungselement in der zweiten Position.

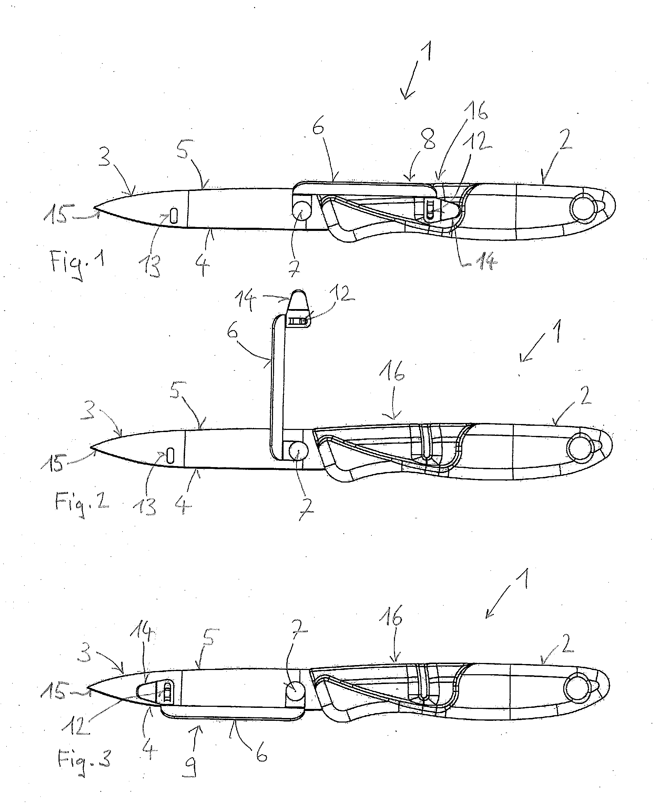

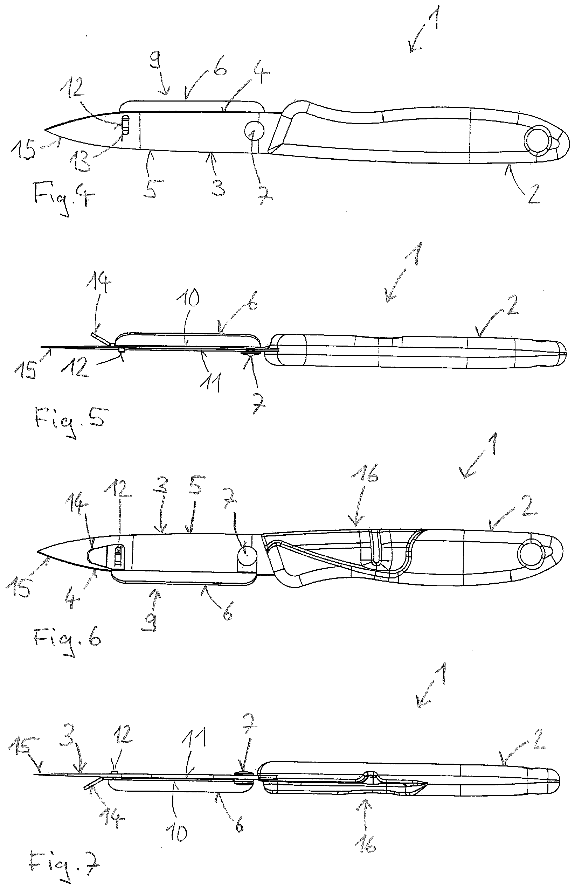

Die Figuren 1 bis 7 zeigen eine erste Ausführungsform des erfindungsgemässen Messers 1. Das Messer 1 umfasst einen Griff 2 und eine am Griff 2 befestigte Klinge 3. In den Figuren 1-4 und 6 erstreckt sich die Klinge 3 in einer zur Bildebene parallelen zentralen Messerebene von einer Schneidkante 4 zu einer von der Schneidkante 4 abgewandten stumpfen Rückkante 5. Der Griff 2 erstreckt sich in einer Grifflängsachse. Bei dieser ersten Ausführungsform erstreckt sich die Klinge 3 des Messers 1 unverstellbar in Richtung der Grifflängsachse vom Griff 2 weg. Das Messer 1 umfasst ein Führungselement 6, welches um eine orthogonal zur zentralen Messerebene ausgerichtete Schwenkachse 7 zwischen einer ersten Position 8 und einer zweiten Position 9 über die stumpfe Rückkante 5 bewegbar ist. Das Führungselement 6 liegt in der ersten Position 8 beim Griff 2. In der zweiten Position 9 ist das Führungselement 6 so der Schneidkante 4 zugeordnet, dass zwischen der Schneidkante 4 und einer Auflagelinie 10 des Führungselements 6 ein Schneidspalt 11 ausgebildet ist.

Bei der in den Figuren 1 bis 7 dargestellten Ausführungsform weist das Führungselement 6 in einem Bereich beim von der Schwenkachse 7 abgewandten freien Ende ein Eingriffselement 12 auf und die Klinge 3 umfasst eine durch die Klinge 3 führende Positionieröffnung 13, welche so angeordnet ist, dass das Eingriffselement 12 in der zweiten Position 9 auf die Positionieröffnung trifft und in diese eingreifen kann. Dabei ist das Führungselement 6 vorzugsweise so ausgebildet oder vorgespannt, dass das Eingriffselement 12 in die Positionieröffnung 13 eingreift und dabei ein Zurückschwenken des Führungselementes 6 gegen die erste Position verhindert. Das Eingreifen ist so ausgebildet, dass zwischen dem Führungselement 6 und der Schneidkante 4 ein Schneidspalt 11 gebildet wird, welcher beim Schälen oder Scheibenschneiden Schalen bzw. Scheiben abtrennt, welche entlang des Schneidspaltes 11 im Wesentlichen eine konstante Mächtigkeit aufweisen.

In der dargestellten Ausführungsform liegt das Eingriffselement 12 auf der von der Schneidkante 4 abgewandten Seite der Positionieröffnung 13 an der vom Führungselement 6 abgewandten Seite der Klinge 3 an dieser an. Dadurch wird sichergestellt, dass die beim Schälen auf das Führungselement 6 wirkenden Kräfte das Führungselement 6 nicht von der Klinge 3 abheben können.

Ein mit einem Finger ergreifbares Entnahmeelement 14 des Führungselementes 6 ermöglicht das Entnehmen des Eingriffselementes 12 aus der Positionieröffnung 13 und die Bewegung des Führungselementes 6 gegen die erste Position 8. Das Entnahmeelement 14 steht etwas von der Klinge 3 ab, so dass in der zweiten Position 9 des Führungselementes 6 mit einem Finger einfach unter das freie Ende des Entnahmeelements 14 gegriffen, das Führungselement 6 aus der Positionieröffnung 13 gehoben und das Führungselement 6 gegen die erste Position 8 geschwenkt werden kann.

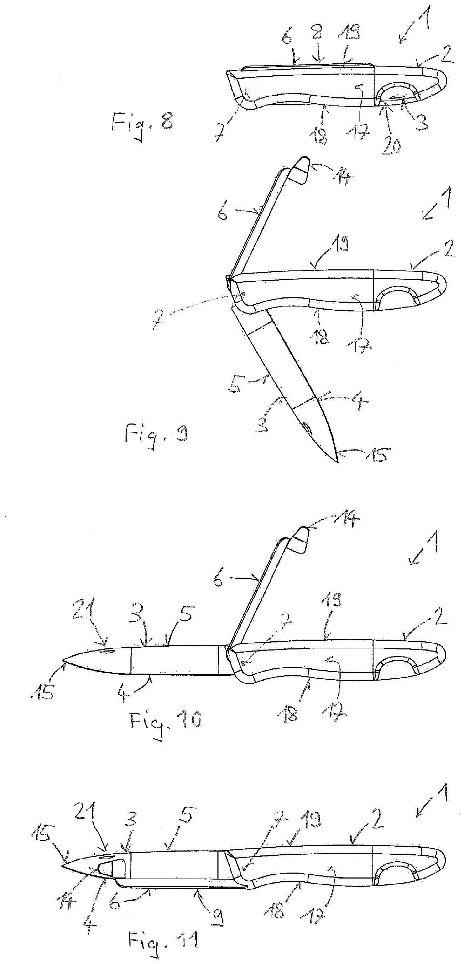

Sowohl bei der Ausführung gemäss den Fig. 1 bis 7 als auch bei der Ausführung gemäss den Fig. 8 bis 11 steht die Klinge 3 in der Richtung vom Griff 2 weg mit einem spitzen Bereich 15 über die Positionieröffnung 13 oder über das sich in der zweiten Position 9 befindende Führungselement 6 vor. Dieser spitze Bereich 15 ist als Ausstechbereich einsetzbar.

Der dargestellte Griff 2 weist einen Aufnahmebereich 16 für das Führungselement 6 auf. In der ersten Position 8 ist das Führungselement 6 zumindest teilweise im Aufnahmebereich 16 aufgenommen und steht somit nicht unangenehm vom Griff 2 vor.

Bei der Ausführungsform gemäss Fig. 1 bis 7 ist die Klinge 3 über eine unverstellbare Verbindung am Griff 2 befestigt die Schwenkachse 7 ist im Bereich der Klinge 3 angeordnet, welcher dem Griff zugewandt ist. Bei der Schwenkachse 7 ist vorzugsweise ein mit dem Führungselement 6 verbundener Bolzen oder eine Niete durch eine Bohrung der Klinge 3 geführt.

Die Figuren 8 bis 11 zeigen eine Ausführungsform des Messers 1, die als Taschenmesser ausgebildet ist. Die Schwenkachse 7 ist orthogonal zur zentralen Messerebene ausgerichtet und in einem Endbereich des Griffs 2 angeordnet. Sie bildet auch die Bewegungsachse der Klinge 3. Bei der Schwenkachse 7 ist eine bei Taschenmessern gängige Positioniervorrichtung ausgebildet, welche das Führungselement 6 in der zweiten Position 9 und die Klinge 3 in einer offenen Position 21 je so fixiert, dass diese nur bei der Anwendung von über je vorgegebenen Rückstellkräften liegenden Krafteinwirkungen gegen die erste Position 8 bzw. gegen eine geschlossene Position 20 bewegbar sind. Die Positioniervorrichtung hält das Führungselement 6 und die Klinge 3 auch so in der ersten Position 8 bzw. in der geschlossenen Position 20, dass zum Ausschwenken zumindest eine vorgegebene Kraft angewendet werden muss.

Das dargestellte Taschenmesser umfasst zwei den Griff 2 in einer zur zentralen Messerebene orthogonalen Richtung zumindest teilweise abschliessende Aussenflächen 17 und zwischen den beiden Aussenflächen 17 eine erste Aufnahmeseite 18 und eine zweite Aufnahmeseite 19, die voneinander abgewandt sind. Die erste Aufnahmeseite 18 nimmt die Klinge 3 auf und die zweite Aufnahmeseite 19 das Führungselement 6. Die Klinge 3 und das Führungselement 6 werden je in entgegengesetzten Richtungen um die Schwenkachse 7 aus dem Griff 2 und in den Griff 2 des Taschenmessers bewegt.

Zum Bereitstellen eines Schälmessers ist die Klinge 3 von der ersten Aufnahmeseite 18 in die offene Position 21 bewegbar. Das Führungselement 6 ist von der zweiten Aufnahmeseite 19 von der ersten Position 8 über die stumpfe Rückkante 5 der sich in Richtung der Grifflängsachse vom Griff 2 weg erstreckenden Klinge 3 in die zweite Position 9 bewegbar.

## Patentansprüche

1. Messer (1) zum Schneiden und Schälen mit einem Griff (2) und mindestens einer am Griff (2) befestigten Klinge (3), wobei sich die Klinge (3) in einer zentralen Messerebene von einer Schneidkante (4) zu einer von der Schneidkante (4) abgewandten stumpfen Rückkante (5) erstreckt, der Griff (2) sich in einer Grifflängsachse erstreckt und sich die Klinge (3) des Messers (1) beim Schneiden oder Schälen in Richtung der Grifflängsachse vom Griff (2) weg erstreckt, **dadurch gekennzeichnet, dass** das Messer (1) ein Führungselement (6) umfasst, welches um eine quer zur zentralen Messerebene ausgerichtete Schwenkachse (7) zwischen einer ersten Position (8) und einer zweiten Position (9) über die stumpfe Rückkante (5) der sich in Richtung der Grifflängsachse vom Griff (2) weg erstreckenden Klinge (3) bewegbar ist, wobei das Führungselement (6) in der ersten Position (8) beim Griff (2) liegt und in der zweiten Position (9) so der Schneidkante (4) zugeordnet ist, dass zwischen der Schneidkante (4) und einer Auflagelinie (10) des Führungselementes (6) ein Schneidspalt (11) ausgebildet ist.

2. Messer (1) nach Anspruch 1, **dadurch gekennzeichnet, dass** die Schwenkachse (7) orthogonal zur zentralen Messerebene ausgerichtet ist.

3. Messer (1) nach Anspruch 1 oder 2, **dadurch gekennzeichnet, dass** das Führungselement (6) in einem Bereich beim von der Schwenkachse (7) abgewandten freien Ende ein Eingriffselement (12) aufweist, welches in der zweiten Position (9) des Führungselementes (6) in eine durch die Klinge (3) führende Positionieröffnung (13) eingreift, wobei ein mit einem Finger ergreifbares Entnahmeelement (14) des Führungselementes (6) das Entnehmen des Eingriffselementes (12) aus der Positionieröffnung (13) und die Bewegung des Führungselementes (6) gegen die erste Position (8) ermöglicht.

4. Messer (1) nach Anspruch 1 bis 3, **dadurch gekennzeichnet, dass** die Klinge (3) vom Griff (2) weg mit einem spitzen Bereich (15) über das Führungselement (6) in der zweiten Position (9) vorsteht, wobei dieser spitze Bereich als Ausstechbereich einsetzbar ist.

5. Messer (1) nach einem der Ansprüche 1 bis 4, **dadurch gekennzeichnet, dass** der Griff (2) einen Aufnahmebereich (16) für das Führungselement (6) aufweist, so dass das Führungselement (6) in der ersten Position (8) zumindest teilweise im Aufnahmebereich (16) aufgenommen ist.

6. Messer (1) nach einem der Ansprüche 1 bis 5, **dadurch gekennzeichnet, dass** die Schwenkachse (7) im Bereich der Klinge (3) angeordnet ist, welcher Bereich bei der sich vom Griff (2) weg erstreckenden Klinge (3) dem Griff (2) zugewandt ist, wobei bei der Schwenkachse (7) vorzugsweise ein mit dem Führungselement (6) verbundener Bolzen oder eine Niete durch eine Bohrung der Klinge (3) geführt ist.

7. Messer (1) nach einem der Ansprüche 1 bis 5, **dadurch gekennzeichnet, dass** die Schwenkachse (7) in einem Endbereich des Griffs (2) angeordnet ist, wobei bei der Schwenkachse (7) vorzugsweise eine Positioniervorrichtung ausgebildet ist, welche das Führungselement (6) in der zweiten Position (9) so fixiert, dass es nur bei der Anwendung einer über einer vorgegebenen Rückstellkraft liegenden Kraft oder dem Lösen einer Verriegelung gegen die erste Position (8) bewegbar ist.

8. Messer (1) nach Anspruch 7, **dadurch gekennzeichnet, dass** die Klinge (3) bewegbar am Griff (2) befestigt ist, wobei in einer geschlossenen Position (20) die Schneidkante (4) der Klinge (3) beim Griff (2) angeordnet ist, so dass die Schneidkante (4) nicht zugänglich ist und in einer offenen Position (21) die Klinge (3) in Richtung der Grifflängsachse vom Griff (2) vorsteht.

9. Messer (1) nach Anspruch 8, **dadurch gekennzeichnet, dass** die Bewegung der Klinge (3) zwischen der geschlossenen Position (20) und der offenen Position (21) durch eine Schwenkbewegung um eine Bewegungsachse erzielbar ist, wobei die Bewegungsachse orthogonal zur zentralen Messerebene ausgerichtet und in einem Endbereich des Griffs (2) angeordnet ist und wobei bei der Bewegungsachse vorzugsweise eine Positioniervorrichtung ausgebildet ist, welche die Klinge (3) in der offenen Position (21) und in der geschlossenen Position (20) so fixiert, dass sie nur bei der Anwendung einer über einer vorgegebenen Bewegungskraft liegenden Kraft gegen die jeweils andere Position (20, 21) bewegbar ist.

10. Messer (1) nach Anspruch 8, **dadurch gekennzeichnet, dass** die Bewegung der Klinge (3) zwischen der geschlossenen und der offenen Position (20, 21) durch eine Schiebebewegung in Richtung der Grifflängsachse aus und in den Griff (2) erzielbar ist, wobei eine Positioniervorrichtung ausgebildet ist, welche die Klinge in der offenen und in der geschlossenen Position (21, 20) so fixiert, dass sie nur bei der Anwendung einer über einer vorgegebenen Bewegungskraft liegenden Kraft gegen die jeweils andere Position (20, 21) bewegbar ist.

11. Messer (1) nach einem der Ansprüche 1 bis 10, **dadurch gekennzeichnet, dass** das Führungselement bei der Auflagelinie eine Schneidkante aufweist, welche in der zweiten Position des Führungselementes so der Schneidkante der Klinge zugewandt ist, dass abhängig von einer wählbaren Schälrichtung jeweils eine der beiden Schneidkanten das Schälen erzielbar macht und die andere als Auflagelinie den Schneidspalt festlegbar macht, wobei sich das Führungselement ausgehend von seiner Schneidkante entlang einer Schneidebene erstreckt und zwischen der zentralen Messerebene und der Schneidebene ein Winkel ausgebildet ist, welcher kleiner als 180° und grösser als 90°ist.

12. Messer (1) nach einem der Ansprüche 1 bis 10, **dadurch gekennzeichnet, dass** das Messer (1) zwei Führungselemente (6) aufweist, wobei die beiden Führungselemente (6) bezüglich der zentralen Messerebene spiegelsymmetrisch angeordnet und je einzeln gleichartig zwischen der jeweiligen ersten und zweiten Position (8, 9) bewegbar sind, wobei zum Schälen jeweils das für die gewünschte Schälrichtung passende Führungselement (6) in der zweiten Position (9) und das andere Führungselement (6) in der ersten Position (8) positionierbar sind.
